# EUROPEAN PATENT APPLICATION

(11) **EP 4 329 142 A1**
(43) Date of publication of application: **28.02.2024**
(21) Application number: 22192121.6
(22) Date of filing: 25.08.2022
(51) Int. Cl.: H02J 7/02, H02M 1/10, H02M 7/797

(54) **ISOLATED BIDIRECTIONAL AC/DC-DC POWER CONVERTER**

(71) Applicant: Tallinn University of Technology, 19086 Tallinn (EE)
(72) Inventor: HUSEV, Oleksandr, 19086 Tallinn (EE); VINNIKOV, Dmitri, 19086 Tallinn (EE); VOSOUGHI KURDKANDI, Naser, 19086 Tallinn (EE); MOHSENI DASH AGHOLI, Parham, 19086 Tallinn (EE)
(74) Representative: Koppel, Mart Enn

(57) **Abstract**

An isolated bidirectional ac/dc-dc power electronic interface, comprising a rectifier module connected with at least two isolated dc-dc modules and a control system. The interface comprises means for modifying the internal configuration of said interface according to said type and level of the input so that it can be connected to single-phase or three-phase ac grid, or two or three wire dc grid. The interface is particularly suitable for onboard battery chargers of electric vehicles (with both vehicle to grid and grid to vehicle power transfer).

## Description

### Technical field

This invention belongs to the field of power electronics and pertains to apparatus and methods of derivation of ac/dc-dc converters as universal onboard battery charger that can be connected to both ac or dc grid using the same output terminals with minimal redundancy and bidirectional operational capability.

### Background art

Obvious trend of nowadays-electric grid is a growing interest to dc (direct current) grid. It is a well-known that ac (alternating current) voltage level can be easily stepped up or down by a transformer. The effective electrical energy distributed system can be constructed. However, recent works show that even a high-voltage dc-current distribution system is more effective than a high-voltage ac system.

Due to the simplicity of storage systems and renewable energy integration, reduction of power electronics stages in many devices that are connected to the conventional ac grid, the low voltage dc grid attracts discussion and research efforts towards implementation. In the long-term perspective it will allow significant increasing of the renewable energy generation systems and cover rising energy demands.

At the same time, it is evident that transition from ac to dc grid cannot happen immediately. Moreover, there is no reason to remove current ac infrastructure.

In the nearest decade, we will observe a merge of dc and ac systems. As a result, new generation of power electronics converters has to be adapted to the dc and ac grid utilities.

It becomes especially important for Electric Vehicles (EV) users. Along with dc and ac grid coexisting, the EV users need to charge their vehicles from both ac and dc grids. While dc fast charging systems have direct access to the battery and proper power electronics inside fast charging stations, the dc grid is similar to ac grid and thus EV requires additional power electronics on board.

There are several patents that are devoted to EV chargers.

US4843299 discloses a universal battery charger and recharger for electric batteries having different charging characteristics. The battery charger includes a microprocessor receiving inputs from current, voltage and temperature sensors for controlling the battery charging profile. A replaceable memory may be included to provide an appropriate charging profile for the battery to be charged. The supply current is varied responsively to the voltage across the battery which is measured when the supply current reaches a predetermined level or after a predetermined time.

US5113127 discloses a universal battery charger with a three-winding transformer. The primary winding is connected in series with the collector-emitter path of a switching transistor. The secondary winding is connected in series with the collector-emitter path of a sense transistor which responds to the current flowing through the switching transistor. The tertiary winding is connected in series with the battery, series-connected batteries or series-connected battery packs sought to be recharged, via a diode, which may be connected in parallel with a capacitor.

US5679017 discloses a charger unit for charging a rechargeable energy storage device. In particular, a universal charger unit is disclosed which comprises a connector having a set of externally accessible contacts for making electrical contact with a corresponding set of receptor contacts on a recharge able energy storage device.

Above-described chargers are universal in terms of different batteries type and can be considered as external charger but is not suitable for EV onboard charger.

In case of conventional EV onboard chargers, there are lots of solutions that are widely represented in research. The closest idea is disclosed in https://ieeexplore.ieee.org/document/8769657 (New Synergetic Control of a 20kW Isolated VIENNA Rectifier Front-End EV Battery Charger J. Azurza Anderson;M. Haider;D. Bortis;J. W. Kolar;M. Kasper;G. Deboy, 2019 20th Workshop on Control and Modeling for Power Electronics (COMPEL)), where Vienna rectifier is combined with two isolated dc-dc converters and provides optimal performance as onboard charger converter. This solution is widely used in EV onboard charges. Vienna rectifier provides rectification of 3 phase ac with minimal losses while isolated dc-dc stages connected in parallel provides isolation and battery charge control with maximum efficiency. It reduces the voltage stress across primary-side semiconductors of dc-dc converters and split the power flow with common current. However, this solution is not proposed for single phase ac.

This converter does not operate in dc grid. It concerns the configuration of the dc-dc stage which consists in the input parallel connection of two dc-dc converters. This is well suited for three-phase ac grid. Furthermore, the fixed connection of two dc-dc converters does not allow utilizing of passive and active components with maximum effectiveness for different input and output voltages.

What is needed therefore is a universal bidirectional power electronic interface that can be connected to both ac and dc grid, both to one and three phase ac grid, and to two or three wire dc grid, with different input and output voltages, such device particularly suitable as onboard charger for EV vehicles.

### Disclosure of the invention

The goal of the invention is achieved by an isolated bidirectional ac/dc -dc power electronic interface, comprising a rectifier module, having input terminals to be connected with or 3 phase ac grid or 2 or 3 wire dc grid, wherein the output of the rectifier module is connected with an input of at least two isolated dc-dc modules, which are connected either in series or in parallel, and the output of said isolated dc-dc modules is to be connected to the battery. The interface further comprises a set of sensors for determining the type and voltage of the grid, a set of switches and a control system, wherein said control system is adapted to

This invention is an isolated bidirectional ac/dc-dc power electronic interface, comprising a rectifier module 5 having input terminals 1, 2, 3, 4 and output terminals 9, 10, 11, 12 connected with inputs of at least two isolated dc-dc modules 6 and 7, and a control system 8 as a universal onboard charger for EV. It is characterized in that said interface has means for detecting the type and level of input ac or dc voltage at said input terminals and said control system is adapted to modify an internal configuration of said interface and control strategy according to the detected type and level of said input ac or dc voltage.

The proposed isolated bidirectional ac/dc - dc power electronic interface comprising a switch *SW₁* for connecting said isolated dc-dc modules in series or in parallel on the input side of these modules. This switch *SW₁* is selected from a group consisting of a mechanical relay, Solid State Relay (SSR), or four-quadrant switch.

Rectifier module 5 is a T-type converter, comprising two-quadrant semiconductor switches *S₁*-*S₈*, four-quadrant switches *S₉*-*S₁₂*, filtering inductors *L_{A}*, *L_{B}, L_{C}*, solid state circuit breakers *SSCB₁* and *SSCB₂*, suppression capacitors *C_{SA}*, *C_{SB}*, *Csc* and switch *SW₁.*

Suppression capacitors *C_{SA}*, *C_{SB}*, *Csc* are capacitors that are connected between input terminals straight after two solid state circuit breakers *SSCB₁* and *SSCB₂*. Circuit breakers are connected to the terminals 1 and 4 that are supposed to be used for the dc grid connection. Filtering inductors *L_{A}*, *L_{B}*, *L_{C}* are in series after suppression capacitors before semiconductor stage. The semiconductor stage (two-quadrant semiconductor switches *S₁-S₈* and four-quadrant switches *S₉-S₁₂*) are similar to the conventional T-type converter with difference in the integrated switch *SW₁.* Switch *SW₁* splits common wire between switches *S₉-S₁₁* and *S₁₂*.

The interface is operated as follows. First, the input type (ac or dc) is determined using appropriate conventional voltage and current sensors. Then, if ac, it is determined if single phase or three phase grid is connected. If dc, it is determined if two-wire or three-wire grid (with neutral) is connected. Furthermore, the voltage is determined.

Then, the interface is configured accordingly as follows.

The proper operation of the isolated bidirectional ac/dc - dc power electronic interface as universal onboard charger with three-phase ac grid with and without neutral wire can be achieved by connection three-phase grid to terminals 1-4 and switching on *SW₁* (conducting) and high switching frequency modulation of switches *S₉-S₁₂* (S*₁₁* optional) and low switching frequency modulation of switches *S₁-S₈*.High switching frequency switches provide current and voltage ripple mitigation, while low switching frequency switches provide fundamental shapes of current and voltage. Low frequency is equal or multiple to the grid frequency.

The proper operation of the isolated bidirectional ac/dc - dc power electronic interface as universal onboard charger with three-wire dc grid can be achieved by connection three-wire to terminals 1, 3, 4 and switching on *SW₁* (conducting), *S₁*, *S₆* and *S₁₁* while switches *S₂*, *S₃*-*S₅*, *S₇*- *S₁₀, S₁₂* are off (non-conducting).

The proper operation of the isolated bidirectional ac/dc - dc power electronic interface as universal onboard charger with two-wire dc grid can be achieved by connection to-wire dc grid to terminals 1, 4 and switching off *SW₁* (non-conducting), *S₃*, *S₆*, *S₇*, *S₉* and *S₁₁* while switches *S₄*, *S₅*, *S₈, S₁₀* are on (conducting) and others *S₁, S₂* may have high switching frequency modulation.

The proper operation of the isolated bidirectional ac/dc - dc power electronic interface as universal onboard charger with single-phase ac grid can be achieved by connection to-wire dc grid to terminals 1, 4 and switching off *SW₁* (non-conducting), *S₃, S₅, S₉* and *S₁₁* while switches *S₄, S₅, S₁₀ are* on (conducting) and others *S₁, S₂, S₇* and *S₈* have high switching frequency modulation as a full bridge converter.

In all cases, the control system 8 which comprises voltage and current sensors and defines the type and level of the grid and provides proper operation of the proposed interface.

### Brief description of the drawings

The present invention is described with reference to the enclosed drawings, where:
Fig. 1 shows the general configuration of the proposed universal onboard battery charger, where Fig 1(a) with the output of the isolated dc-dc modules connected in parallel and Fig 1(b) with such output connected in series
Fig. 2(a) shows internal structure of the rectifier module, while Fig. 2(b) shows the possible realization of two-quadrant switches *S₁-S₈*, and Fig. 2(c) shows the realization of four-quadrant switches *S₉-S₁₂*.
Fig. 3 shows the series configuration of the isolated dc-dc modules from the input side, where Fig 3(a) shows the connection to the conventional three-phase ac system and Fig 3(b) shows the connection to the three-wire dc system.
Fig. 4 shows the parallel configuration of the isolated dc-dc modules from the input side, where Fig 4(a) the single-phase ac grid-connection and Fig 4(b) shows the two-wire dc grid connection.
Fig. 5 shows two alternative embodiments of the rectifier module.
Fig. 6 shows one possible realization of the proposed universal onboard charges with real semiconductors and connection to three-phase ac grid.
Fig. 7 shows the example of the possible configuration of isolated dc-dc modules, where Fig 7(a) shows parallel input configuration of isolated dc-dc modules; Fig 7(b) shows the series input configuration of isolated dc-dc modules without neutral point; and Fig 7(c) shows the series input configuration of isolated dc-dc modules with neutral point.

### Detailed description of the embodiments

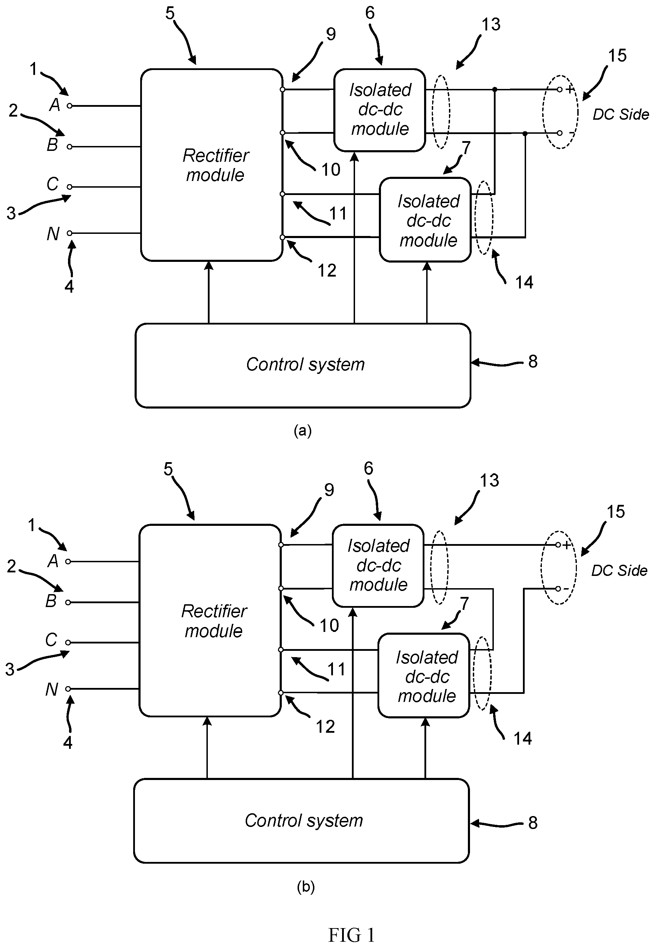

The proposed isolated bidirectional ac/dc - dc power electronic interface as universal onboard charger is shown in Fig 1. The proposed converter is bidirectional, i.e., it can transfer power in both directions. It has input terminals 1 to 4. The input voltage to be applied to terminal 1 to 4 is either three-phase ac, single-phase ac or two or three wire dc (with or without neutral point). The interface comprises a rectifier module 5 with its output terminals 9 to 12 and two high switching frequency isolated dc-dc modules 6 and 7 connected to the output terminals 9 to 12 of the rectifier module. Each of the isolated dc-dc modules have correspondent output terminals 13 and 14 that are connected to terminals 15 of the interface for connecting a battery to be charged. The system comprises a control system 8 for controlling the operation of the rectifier module and the isolated dc-dc modules. The system also comprises means for detecting the type of the input grid and the voltage (not shown), wherein said control system is adapted to apply control strategy of said rectifier module 5 and said isolated dc-dc modules according to the determined type and voltage of the input grid.

The connection between the isolated dc-dc modules 6 and 7 on the output side 13, 14 can be in parallel (Fig. 1(a)) or in series (Fig. 1(b)), depending on the required battery voltage. If the battery voltage is low (200 V 500 V), then the parallel connection of said dc-dc modules is preferable and if the battery voltage is high (over 500 V) then series connection of said dc-dc modules is required. Preferably, this connection is hard wired because for most of the chargers the battery type is not supposed to be changed (e.g, in the case of electric vehicles).

The rectifier module 5 comprises means for changing the internal configuration of said rectifier module so that it can be connected to both ac and dc grids, including three phase and single-phase ac grid as well to two and three wire dc (with or without the neutral point).

The connection between the isolated dc-dc modules on the output side does not have any impact on the connection between rectifier module 5 with isolated dc-dc module 6 and isolated dc-dc module 7 which is illustrated in Fig. 1.

The system has sensors (not shown) in its input to determine the type (i.e., ac or dc) and other parameters of the input (i.e., single-phase or three-phase ac, two or three-wire dc) and measure the voltage.

If the input power supply of the proposed system is a three-phase ac, then the connection between rectifier module 5 and isolated dc-dc module 6 will be in series, and if the input power supply of the proposed system is a single-phase ac, then the isolated dc-dc modules will be connected in parallel.

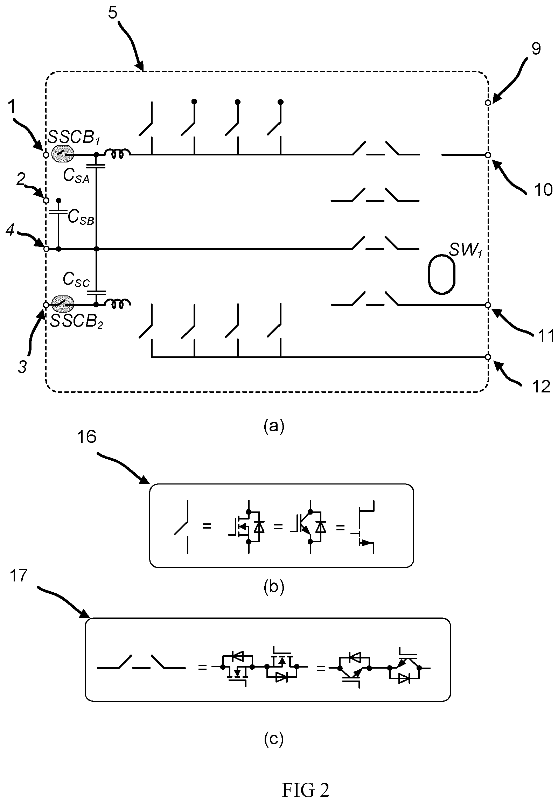

If the input power of the proposed system is supplied by dc voltage, then the connection between the isolated dc-dc modules depends on the size of the dc voltage. For the input dc voltage of 350-380 V, the connection between the modules will be parallel and for the input voltage of 700-750 V the connection will be in series. On one hand it is controlled by control system 8 considering the present voltage across input terminals 1 to 4. From another side, it is controlled by internal structure of the rectifier module 5 which is illustrated in Fig. 2(a).

Preferably, the rectifier module 5 is a modified T-type converter that is realized by semiconductor switches *S₁-S₁₂* and filtering inductors *L_{A}*, *L_{B}*, *L_{C}*, where *S₁-S₈* are two-quadrant switches (see Fig. 2(b) for possible embodiments) and *S₉-S₁₂* are four-quadrant switches (see Fig. 2(c) for possible embodiments). Also, it has Solid State Circuit Breakers (SSCB) *SSCB₁* and *SSCB₂* are connected at the input terminals. Suppression capacitors *C_{SA}*, *C_{SB}*, *Csc* are connected between the input terminals that are required for dc grid connection/disconnection.

Suppression capacitors *C_{SA}*, *C_{SB}*, *Csc* are capacitors that are connected between input terminals straight after two circuit breakers *SSCB*s. These circuit breakers SSCB are connected to the terminals 1 and 4 that are supposed to be used for the dc grid connection. Filtering inductors *L_{A}*, *L_{B}*, *L_{C}* are in series after suppression capacitors before semiconductor stage.

This solution may have several control approaches including Vienna rectifier mode, where only four-quadrant switches *S₉-S₁₂* are operated in high-frequency switching mode, while other switches *S₁-S₈* operate in line-frequency mode. The states of switches are illustrated in Table.

The rectifier module 5 according to the invention comprises a switch *SW₁*, which adds reconfiguration capability. Switch *SW₁* splits common wire between switches *S₉-S₁₁* and *S₁₂*. If it is conducting, switches *S₉-S₁₂* have common point and it corresponds to the conventional T-type configuration, if it is not conducting the switch *S₁₂* does not have a connection with switches *S₉-S₁₁*.

Said switch *SW₁* can be a mechanical relay, a Solid State Relay (SSR), or four-quadrant switch. If a four-quadrant switch is used, in order to reduce the conduction losses, a MOSFET transistor can be used instead of an IGBT transistor. However, since switch *SW₁* is only used to change the system configuration, mechanical relay is preferable since the conduction losses of the mechanical relay are close to zero. The series or parallel configurations of the input of isolated dc-dc modules 6 and 7 is determined by the rectifier module 5. If the switch *SW₁* is on (conducting), the isolated dc-dc modules are connected in series. If the *SW₁* switch is off (not conducting). the isolated dc-dc modules are connected in parallel

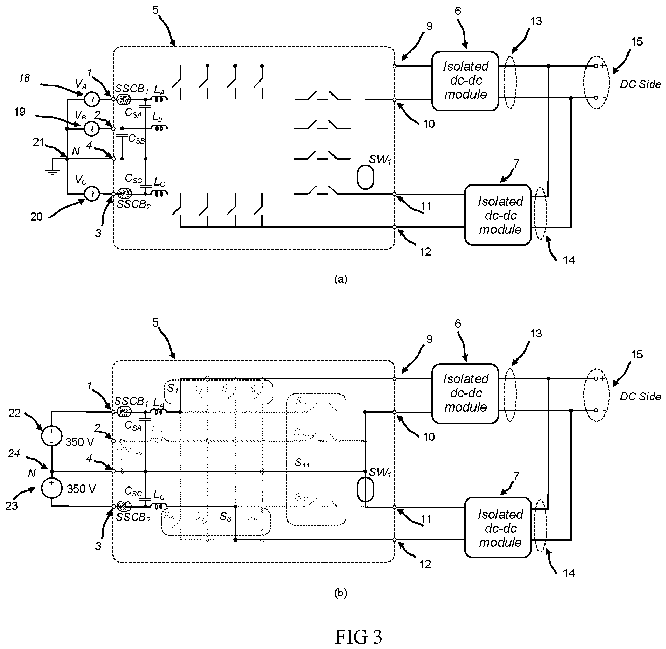

Fig. 3 shows the series configuration of the isolated dc-dc modules from the input side.

The first case when the switch *SW₁* is on (conducting) is shown in Fig. 3(a). It corresponds to the connection to the conventional three-phase ac system with or without neutral wire. Three-phases 18 to 20 are connected to the corresponding input terminals 1 to 3. Optionally, neutral wire 21 can be connected to the input terminal 4. Three inductor filters *L_{A}*, *L_{B}* and *L_{C}* are connected in series for each phase in order to control the current of each phase. Two-quadrant switches *S₁ to S₅* operate in a low switching-frequency (LSF) mode, while four-quadrant switches *S₉ to S₁₂* operate in response for high-frequency modulation. Switches *S₇* and *S₈* are off (non-conducting).

The second case when the switch *SW₁* is on (conducting) is shown in Fig. 3(b). It corresponds to the connection to the three-wire dc grid. For any dc grid all switches *S₁ to S₁₂* of the rectifier module 5 are in static mode. In this particular case only switches *SW₁, S₁*, *S₆* and *S₁₁* are on (conducting), while other switches are off (non-conducting).

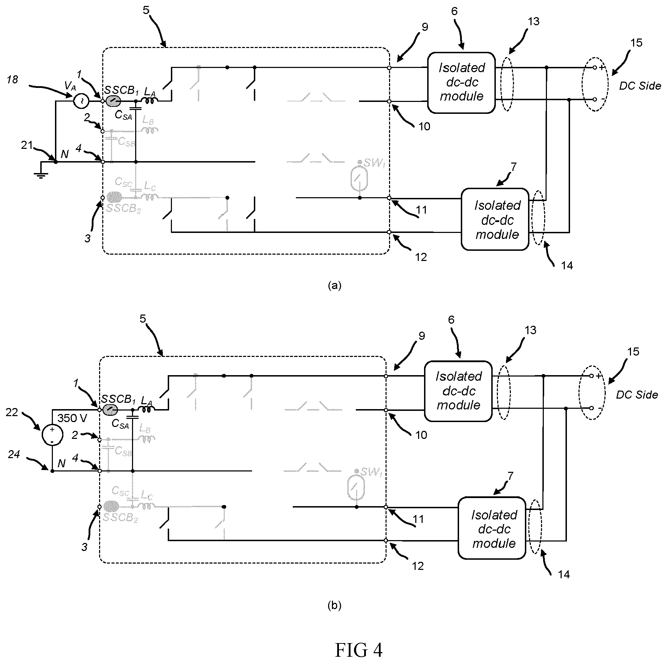

Fig. 4 shows the parallel configuration of the isolated dc-dc modules from the input side. In both cases the switch *SW₁* is off (non-conducting) and splits terminals 10 and 11 of the rectifier module 5. Fig. 4 (a) shows the single-phase ac grid connection to the battery charger. In this case, switches *S₄, S₅, S₁₀, S₁₂* are in static conducting mode, while switches *S₃, S₆, S₉, S₁₁* are in static non-conducting mode. It provides parallel input connection of the Isolated dc-dc module 6 and the Isolated dc-dc module 7. Due to the reduced single-phase voltage compared to three-phase voltage, the parallel input connection of the isolated dc-dc modules does not change the range of output voltage level of the battery.

Switches *S₁, S₂, S₇* and *S₈* are responsible for high-switching frequency modulation.

Fig. 4 (b) shows the two-wire dc grid connection to the battery charger. In this case switches *S₄*, *S₅*, *S₁₀, S₁₂* are in static conducting mode, while switches *S₃*, *S₆, S₉, S₁₁* are in static non-conducting mode similar to previous configuration. But in advance, the switch *S₈* is conducting and *S₇* is non-conducting and only two switches *S₁, S₂,* may have high frequency modulation for input dc grid voltage pre-regulation.

As a result, the presented isolated bidirectional ac/dc - dc power electronic interface can accept charging from single-or three-phase ac grid as well as from two or three-wire dc grid. Internal reconfiguration by switch *SW₁* and control of switches of rectifier module provides parallel or series input connection of isolated dc-dc modules which in turn provides optimal utilization of the isolated dc-dc modules.

Using of active switches of the rectifier module 5 along with bidirectional high switching frequency isolated dc-dc modules allow to realize the bidirectional power flow of the whole onboard charger.

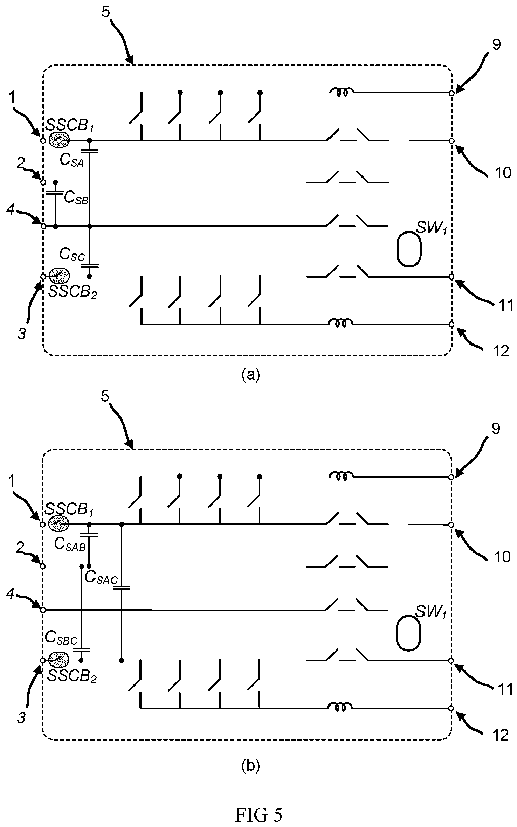

Fig. 5 shows the possible embodiments of the rectifier module 5. First embodiment shown in Fig 5 (a) has only two inductors that are connected to the terminals 9 and 12. The peak current of phases A, B and C (18, 19 and 20 in Fig. 3) is equal to the peak current of the input of isolated dc-dc modules. This reduces the volume of stored energy inside the passive elements and its size correspondently.

Fig 5(b) shows that the suppression capacitors are connected phase-to-phase. This solution can be applied to any of the above-described solutions (Fig. 2 or Fig. 5(a)).

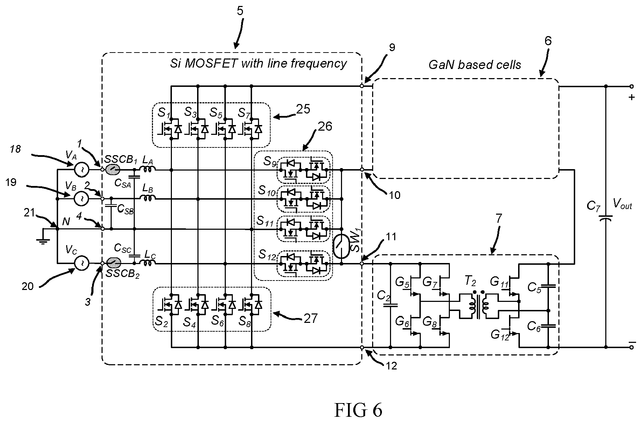

Fig. 6 shows one possible realization of the proposed universal onboard charger with actual semiconductors and connection to three-phase ac grid. In this case, the rectifier module is adapted to work as a Vienna rectifier with synchronous active switches *S₁*-*S₈* instead of diodes (line frequency transistors 25, 27), while four-quadrant switches *S₉-S₁₂* composed of transistors 26 perform high-switching frequency. The high-frequency modules 6 and 7 can be realized based on high-frequency GaN switches on their primary and secondary sides along with isolated high-frequency transformers T1 and T2.

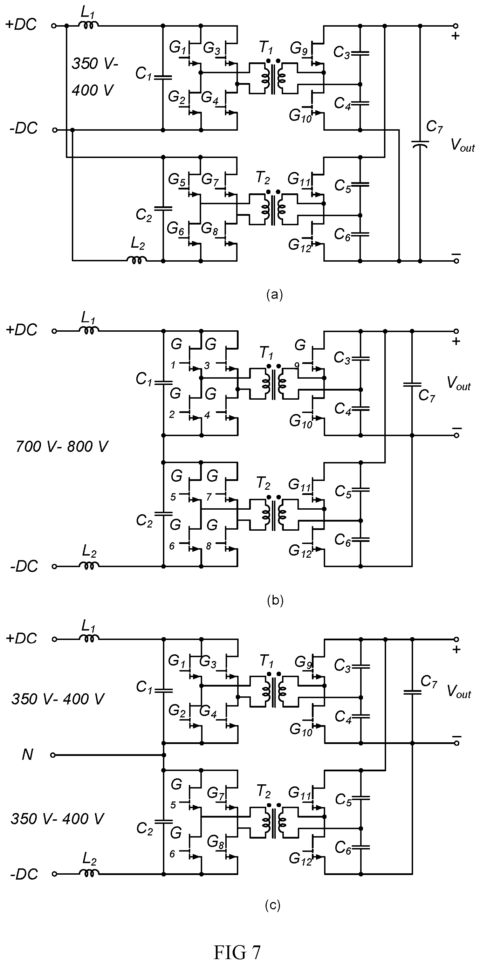

Any high-frequency switches can be used as well as modified configuration of dual active bridge topology. At the same time, the re-configuration capability makes the GaN transistors the most feasible solution due to the lowering voltage despite on the different voltage level at input side. It is also illustrated in Fig. 7.

Fig. 7(a) shows the parallel input configuration of isolated dc-dc modules. In this embodiment with GaN transistors G1 to G12 it can handle up to 400 V input voltage. Parallel interleaved operation reduces current stress.

Fig. 7(b9 and Fig. 7(c) show the series input configuration of the isolated dc-dc modules which in turn handles input voltage up to 800 V. Fig. 7(b) shows the solution with neutral wire (three-wire dc grid or three-phase system with neutral point). Fig. 7(c) shows the two-wire dc grid or three-phase ac without neutral point.

Summarizing the above-described operation principle of the proposed isolated bidirectional ac/dc - dc power electronic interface is an effective solution as universal onboard charger from grid-side point of view. Using the same components and reconfiguration capability this interface provides maximum charging power which in turns provides faster charging of the EV. If higher voltage is available, which corresponds to the three-phase ac grid or three-wire dc grid or 700 V two-wire dc grid the series configuration of the primary side of dc-dc modules allows to split voltage and provide maximum power. In case of low voltage grid (single-phase ac or 350 V-400 V dc) the serios connection is replaced by parallel. It allows using the same transistors of the dc-dc modules and double the current due to the splitting between modules which in turn allows to keep the same amount of power. In advance to keeping the same power for high and low voltage level, capability of working with dc grid can provide up to two times higher power (and reduce charging time correspondently) compared to ac grid. It is explained by absence of low frequency power ripple in dc grid and utilize the converter in the most effective way.

Also, utilization of active switches allows to realize the bidirectional power flow which corresponds to the vehicle to grid concept (V2G).

**Table. States of the switches,**

| Grid | SW₁ | S₁ | S2 | S3 | S4 | S5 | S₆ | S7 | S₈ | S9 | S10 | S₁₁ | S12 |
|---|---|---|---|---|---|---|---|---|---|---|---|---|---|
| Single-phase ac | OFF | HSF | HSF | OFF | ON | ON | OFF | HSF | HSF | OFF | ON | OFF | ON |
| 350 V- 400 V dc | OFF | HSF (optional) | HSF (optional) | OFF | ON | ON | OFF | OFF | ON | OFF | ON | OFF | ON |
| Three-phase ac | ON | LSF | LSF | LSF | LSF | LSF | LSF | OFF | OFF | HSF | HSF | HSF (optional) | HSF |
| Three-wire dc | ON | ON | OFF | OFF | OFF | OFF | ON | OFF | OFF | OFF | OFF | ON | OFF |
| Two-wire 700 V-800 V dc | ON | ON | OFF | OFF | OFF | OFF | ON | OFF | OFF | OFF | OFF | OFF | OFF |

| | | | | | | | | | | | | | |
|---|---|---|---|---|---|---|---|---|---|---|---|---|---|
| HSF - high switching frequency, LSF - low switching frequency | | | | | | | | | | | | | |

### Reference numbers

- 1-4 -: input terminals
- 5 -: rectifier module;
- 6 -: a first isolated dc-dc module;
- 7 -: a second isolated dc-dc module;
- 8 -: control system;
- 9-12 -: output terminals of the rectifier module:
- 13 -: output terminals of the first isolated dc-dc module;
- 14 -: output terminals of the first isolated dc-dc module;
- 15 -: output terminals of the universal onboard charger;
- 16 -: two-quadrant switches;
- 17 -: four-quadrant switches;
- 18 -: ac power source phase A;
- 19 -: ac power source phase B;
- 20 -: ac power source phase C;
- 21 -: neutral wire of ac power source;
- 22 -: dc power source;
- 23 -: dc power source;
- 24 -: neutral wire of dc power source;
- 25 -: line switching frequency transistors;
- 26 -: high switching frequency transistors;
- 27 -: line switching frequency transistors.

## Claims

1. An isolated bidirectional ac/dc-dc power electronic interface, comprising a rectifier module (5) having input terminals (1, 2, 3, 4) and output terminals (9, 10, 11, 12) connected with an inputs of at least two isolated dc-dc modules (6, 7), and a control system (8), **characterized in that** said interface comprises means for detecting the type and level of input ac or dc voltage at said input terminals, means for modifying the internal configuration of said interface according to said type and level of the input, wherein said control system is adapted to said internal configuration and a control strategy according to said type and level of said input.

2. An isolated bidirectional ac/dc - dc power electronic interface according to claim 1, comprising a switch *SW₁* for connecting said isolated dc-dc modules in series or in parallel on the input side of these modules.

3. An isolated bidirectional ac/dc - dc power electronic interface according to claim 2, wherein said switch *SW₁* is selected from a group consisting of a mechanical relay, Solid State Relay (SSR) and four-quadrant switch.

4. An isolated bidirectional ac/dc - dc power electronic interface according to claim 2, wherein said switch *SW₁* is a mechanical relay.

5. An isolated bidirectional ac/dc - dc power electronic interface according to claims 1 to 4, wherein said rectifier module (5) is a T-type converter, comprising solid state circuit breakers *SSCB₁* and *SSCB₂*, connected to said terminals in series, suppression capacitors *C_{SA}*, *C_{SB}*, *C_{SC}*, connected between said input terminals, filtering inductors *L_{A}*, *L_{B}*, *L_{C}* connected in series after suppression capacitors, and a set of two-quadrant semiconductor switches *S₁*-*S₈*, and set of four-quadrant switches *S₉-S₁₂*, arranged as T-type converter, and integrated switch *SW₁*that splits common wire between switches *S₉-S₁₁* and *S₁₂*.

6. An onboard charger for electric vehicle, comprising said isolated bidirectional ac/dc - dc power electronic interface according to claims 1 to 5.
